# EUROPÄISCHE PATENTSCHRIFT

(11) **EP 3 369 556 B1**
(45) Veröffentlichungstag und Bekanntmachung des Hinweises auf die Patenterteilung: **30.06.2021**
(21) Anmeldenummer: 17196320.0
(22) Anmeldetag: 13.10.2017
(51) Int. Cl.: B29C 65/16, B29C 65/78, D06H 5/00, B29K 101/12

(54) **NAHTHERSTELLMASCHINE ZUM VERBINDEN VON FLÄCHIGEN BIEGESCHLAFFEN KOMPONENTEN**
SEAM CREATION MACHINE FOR CONNECTING FLAT FLEXIBLE COMPONENTS
MACHINE DE FABRICATION DE SOUDURE DESTINÉE À RELIER DES COMPOSANTS SOUPLES PLATS

(30) Priorität: 02.03.2017 EP 17158973
(43) Veröffentlichungstag der Anmeldung: 05.09.2018
(73) Patentinhaber: Leister Technologies AG, 6056 Kägiswil (CH)
(72) Erfinder: Franke, Alexander, 6064 Kerns (CH); Lehmeier, Frederike, 6064 Kerns (CH); Niederberger, Adolf, 6056 Kägiswil (CH); Schmid, Urs, 6048 Buttisholz (CH); Schmid, Daniel, 6004 Luzern (CH); Rauschenberger, Jens, 6024 Hildisrieden (CH)
(74) Vertreter: Klocke, Peter

(56) Entgegenhaltungen:
- WO-A1-2005/003432
- TANJA VATTERODT ET AL: "Textilschweissen", KUNSTSTOFFE, CARL HANSER VERLAG, MUNCHEN, DE, Nr. 10, 1. Oktober 2006 (2006-10-01), Seiten 221-224, XP001525361, ISSN: 0023-5563

## Beschreibung

Die Erfindung betrifft eine Nahtherstellmaschine zum Verbinden von mindestens zwei flächigen biegeschlaffen Komponenten mittels wenigstens einer Verbindungsnaht, wobei wenigstens eine der Komponenten thermoplastisches Kunststoffmaterial aufweist, das in Form einer homogenen Folie oder eines textilen Stoffgebildes aus miteinander verschlungenen Kunststofffasern oder Kunststofffäden vorliegt, mit einem Maschinengehäuse, das mit einer Arbeitsfläche für die zu verbindenden Komponenten und einem darüber angeordneten auskragenden Arbeitsarm ausgebildet ist, mit mindestens einer Haltestange zur Aufnahme eines Nahtherstellwerkzeuges und mindestens einer Tragestange zur Aufnahme mindestens eines auf die Arbeitsfläche absenkbaren kraftbeaufschlagten Komponentendrückerelementes, die in dem Arbeitsarm nach unten vorstehend aufgenommen sowie in Richtung ihrer Längsachse bewegbar gelagert sind, und mit einer in der Arbeitsfläche aufgenommenen Stützplatte für die Komponenten, zu der die Haltestange und die Tragestange senkrecht angeordnet sind und in die mindestens ein oszillierend antreibbarer Komponentenschieber eingesetzt ist, wobei zumindest die Tragestange federkraftbeaufschlagt auf die Stützplatte absenkbar ist und das Komponentendrückerelement im abgesenkten Zustand mit dem mindestens einen Komponentenschieber zusammenarbeitet, wobei unten an der Haltestange mindestens ein Nahtpressstempel als Nahtherstellwerkzeug angeordnet ist, und ein Laserstrahl auf die Stützplatte gerichtet ist und dort einen Laserlichtspot formt.

Nahtherstelltechniken und Nahtherstellmaschinen sind äußerst vielfältig und hinlänglich bekannt. Nahtherstellmaschinen der vorstehend genannten Art dienen zum mechanischen Herstellen einer Verbindungsnaht, die dekorativ und/oder funktionell sein kann. Solche Nähte können beispielsweise dazu vorgesehen sein, verschiedene Stücke zu einem Objekt aneinander zu fügen. Die zu verbindenden Komponenten können gewebte Textilen, Strickwaren, Leder, Synthetik-Materialien usw. sein. Dabei werden zur Herstellung der Verbindungsnaht üblicherweise ein oder mehrere Fäden durch Nähen miteinander verknüpft, wobei ein sogenannter Oberfaden zuvor mit einer Nadel durch die zu verbindenden Stellen geschoben wird und dabei mit einem sogenannten Unterfaden eine Fadenschlinge bildet.

Nähmaschinen für den Hausgebrauch und für die industrielle Fertigung arbeiten alle nach dem gleichen Konzept. Solche Nähmaschinen weisen oft ein C-förmiges Gestell auf, an dessen offenem Ende die für den Nähvorgang notwendigen Elemente, wie Nähkopf mit Nadel und Oberfaden, Fadenspanner, Drückerfuß, Unterfadenrollen mit Greifer und Transporteinrichtungen vorgesehen sind. Zum Antrieb sind bei moderneren Nähmaschinen ein Antriebsmotor und Kraftübertragungsmittel vorgesehen, die meist in dem C-förmigen Gestell untergebracht sind.

Aus der DE 10 2011 100 103 A1 ist eine Nähmaschine mit Stichbildmitteln bekannt, die eine parallel zur ihrer Längsachse oszillierend angetriebene Nadelstange zur Aufnahme einer einen Oberfaden führenden Nadel aufweist, die mittels einer Stangenantriebsvorrichtung antreibbar ist, wobei die Nähmaschine ferner zumindest ein Nähguttransportmittel aufweist, das mittels einer Nähguttransportantriebsvorrichtung kontinuierlich antreibbar ist.

Die WO 2005/003432 A1 legt eine Nahtfügevorrichtung zum Verbinden von zwei oder mehreren flexiblen bahnförmigen Materialien entlang einer fadenfreien Naht offen. Die Nahtfügevorrichtung umfasst Verbindungsmittel zum Verbinden von mindestens zwei flexiblen bahnförmigen Materialien. Das Verbindungsmittel weist einen Klemmbereich auf, der lösbar mit dem flexiblen bahnförmigen Material in Eingriff steht, und Antriebsmittel, die zum Eingriff mit dem flexiblen bahnförmigen Material ausgebildet und angeordnet sind und es schrittweise durch das Verbindungsmittel bewegen. Das Antriebsmittel ist so ausgebildet und angeordnet, dass es mit dem Anpressabschnitt zusammenwirkt, um dann sequentielles Anpress- und Antriebsmaterial durch die Nahtfügevorrichtung zu treiben, wobei nur einer der Anpressabschnitte oder das Antriebsmittel zu einem bestimmten Zeitpunkt mit dem flexiblen bahnförmigen Material in Kontakt ist. Ein Verfahren zum Verbinden von flexiblen bahnförmigen Materialien unter Verwendung einer erfindungsgemäßen Nahtfügevorrichtung wird ebenfalls beschrieben.

Neben den im Stand der Technik bekannten Naturfasern kommen heute immer mehr Kunststofffasern bei der Herstellung von Bekleidung zum Einsatz. Dies liegt nicht nur an den gegebenenfalls geringen Kosten für die Kunststofffasern im Vergleich zur Naturfaser, sondern auch an deren hoher Funktionalität.

Ein hinlänglich bekanntes Problem von aus Fäden hergestellten Verbindungsnähten ist deren relative Brüchigkeit, Auflösbarkeit und/oder Dichtigkeit. Die Qualität einer Nähnaht hängt stark von der Sorgfalt der nähenden Person ab.

Ausgehend von dem vorstehend genannten Stand der Technik liegt der Erfindung die Aufgabe zugrunde, eine kompakte Nahtherstellmaschine vorzuschlagen, mittels der auf einfache und kostengünstige Art und Weise beispielsweise Kleidungsstücke jeglicher Art hergestellt werden können, deren Material Kunststofffasern zumindest zum Teil umfasst oder sogar vollständig aus Kunststofffasern oder Kunststoffmaterial hergestellt ist, wobei eine erfindungsgemäße Nahtherstellmaschine die Funktionssicherheit, die Betriebssicherheit und den Bedienkomfort verbessert. Diese Aufgabe wird erfindungsgemäß durch eine Nahtherstellmaschine mit den Merkmalen des unabhängigen Patentanspruchs 1 gelöst. Weitere vorteilhafte Ausführungsformen sind den darauf folgenden abhängigen Patentansprüchen zu entnehmen.

Kerngedanke der Erfindung ist es, eine herkömmliche Nähmaschine, die zum Verbinden von flächigen biegeschlaffen Komponenten mit einer Fadennaht ausgebildet ist, derart abzuwandeln, dass damit Schweißnähte herstellbar sind. Danach weist bei der erfindungsgemäßen Nahtherstellmaschine zum Verbinden von mindestens zwei flächigen biegeschlaffen Komponenten mittels wenigstens einer Verbindungsnaht, wobei wenigstens eine der Komponenten thermoplastisches Kunststoffmaterial in beliebiger Art und Form aufweist, die Stützplatte ein lichtdurchlässiges Arbeitsfenster auf, das unterhalb des Nahtpressstempels angeordnet ist, wobei der Laserstrahl von unten auf das Arbeitsfenster der Stützplatte gerichtet ist und der Nahtpresstempel den Laserlichtspot vollständig abdeckt, oder es ist der Nahtpressstempel mindestens teilweise lichtdurchlässig ausgebildet, wobei der Laserstrahl von oben durch den Nahtpresstempel auf die Stützplatte gerichtet ist. In der Arbeitsfläche der Nahtherstellmaschine ist die Stützplatte für die Komponenten angeordnet, zu der die wenigstens eine Haltestange und die wenigstens eine Tragestange senkrecht angeordnet und bewegbar ist. Das jeweilige Nahtherstellwerkzeug kann mit der Haltestange und das jeweilige Komponentendrückerelement mit der Tragestange lösbar oder fest verbunden sein. Vorzugsweise sind diese austauschbar. Das Nahtherstellwerkzeug bzw. das Komponentendrückerelement kann aus Metall oder einem anderen geeigneten Material, z.B. einem Glas- oder Kunststoffmaterial hergestellt sein. Der Laserstrahl, der von einer Laserquelle erzeugt wird, ist vorzugsweise mittels strahllenkenden Mitteln auf die Stützplatte gerichtet, um dort den Laserlichtspot zu formen. Vorzugsweise wird dazu ein optischer Lichtleiter verwendet, vorzugsweise ein Glasfaserlichtleiter. Als besonders günstig hat sich eine Laserquelle erwiesen, die einen Laserstrahl im nahen Infrarotbereich aussendet, vorzugsweise mit einer Wellenlänge von etwa 940 nm. Dabei kann das Laserlicht von unten durch ein Fenster auf die zwischen der Stützplatte und dem Komponentendrückerfuß geklemmten, zu verbindenden Komponenten oder von oben auf die Komponenten gerichtet sein. Von oben kann das Laserlicht die zu verbindenden Komponenten direkt von der Seite, durch den Nahtpressstempel und/oder durch den Komponentendrückerfuß beaufschlagen. Bei Beaufschlagung der zu verbindenden Komponenten von oben durch den Nahtpresstempel ist dieser mindestens teilweise lichtdurchlässig ausgebildet und der Laserstrahl von oben auf die Stützplatte gerichtet. Bei einer weiteren günstigen Ausführungsform der Erfindung ist der Laserstrahl durch den Nahtpressstempel hindurch auf die Stützplatte gerichtet. Alternativ kann der Laserstrahl auch durch den Komponentendrückerfuß hindurch auf die Stützplatte gerichtet sein, sofern dessen Fußplatte eine geeignete Ausnehmung oder ein entsprechendes lichtdurchlässiges Durchtrittsfenster aufweist oder die Fußplatte gänzlich aus einem lichtdurchlässigen Glas- oder Kunststoffmaterial besteht. Die zu verschweißenden Komponenten werden für die Bildung der Verbindungsnaht, d.h. der Schweißnaht, zwischen dem Arbeitsfenster der Stützplatte und dem Nahtpressstempel sowie dem Komponentendrückerfuß hindurchbewegt, wobei der Laserlichtspot die Komponenten dort erwärmt und plastifiziert. Das lichtdurchlässige Arbeitsfenster, das unterhalb des Nahtpressstempels angeordnet ist, ist nur dann zwingend erforderlich, wenn der Laserstrahl von unten an die Schweißstelle herangeführt und auf die zu verbindenden Komponenten gerichtet ist, um dort den Laserlichtspot zu formen. Bei der Verwendung eines nicht lichtdurchlässigen Nahtpressstempels in Verbindung mit dem lichtdurchlässiges Arbeitsfenster, durch den der Laserstrahl hindurchtritt, wird die Größe des Nahtpressstempels derart gewählt, dass dieser den Laserlichtspot vollständig von oben abdeckt und so ein Schutz der Umgebung vor gefährdender Laserstrahlung gewährleistet ist.

Bei einer bevorzugten Ausführungsform der Erfindung ist die Haltestange als eine zu ihrer Längsachse oszillierend antreibbare Hubstange ausgeführt. Vorzugsweise ist dabei das Komponentendrückerelement als Komponentendrückerfuß ausgebildet. Dabei ist die zu ihrer Längsachse oszillierend antreibbare Hubstange in dem auskragenden Arbeitsarm aufgenommen, wobei an diesem unten der mindestens eine Nahtpressstempel als Nahtherstellwerkzeug angeordnet ist, der die übliche Nähnadel ersetzt. Der mindestens eine absenkbare kraftbeaufschlagte oder kraftbeaufschlagbare Komponentendrückerfuß, der an der Tragestange unten angeordnet ist, arbeitet im abgesenkten Zustand mit dem mindestens einen Komponentenschieber zusammen. Der Komponentendrückerfuß ist insbesondere zumindest in Längsrichtung federfähig verschiebbar gelagert und im abgesenkten Zustand axial nachgiebig an der Stützplatte in Anlage gehalten, wobei die den Komponentendrückerfuß beaufschlagende Kraft von einem mechanischen oder einem pneumatischen Federelement bereitgestellt wird.

Der mindestens eine Nahtpressstempel der wenigstens einen Hubstange kann mittels der Hubstange und der dafür vorgesehenen Stangenantriebsvorrichtung auf die Stützplatte abgesenkt und gegen diese mittels einer Anpresskraft gedrückt werden, wobei die Anpresskraft vorzugsweise einstellbar ist. Die axiale Länge des Nahtpressstempel und/oder der Hubstange ist vorzugsweise derart gewählt, dass der Nahtpressstempel bei vollkommen abgesenkter Hubstange auf der Stützplatte aufsitzt. Alternativ oder zusätzlich kann der Nahtpressstempel und/oder die Hubstange in axialer Richtung federungsfähig gelagert und geführt sein, sodass die Dicke der beiden zu verbindenden Komponenten, die beim Herstellen der Verbindungsnaht zwischen dem Nahtpressstempel und der Stützplatte zum lokalen Verschweißen der Komponenten hindurchgeführt werden, beliebig sein kann.

Der Nahtpressstempel kann aus Metall oder aus einem sonstigen Material mit geeigneter Festigkeit einstückig hergestellt sein und kann abhängig von dem Material lichtundurchlässig oder mindestens teilweise lichtdurchlässig sein. Alternativ kann er auch mehrstückig ausgebildet sein, beispielsweise als metallische Hülse mit einem transparenten Glaskern. Der Laserstrahl, der auf die Stützplatte gerichtet ist, kann von einer Laserquelle ausgehen, die innerhalb oder außerhalb des Maschinengehäuses der Nahtherstellmaschine angeordnet ist.

Bei einer anderen bevorzugten Ausführungsform der Erfindung sind die Haltestange und die Tragestange miteinander integral ausgebildet und bilden eine Aufnahmestange für das Nahtherstellwerkzeug und das Komponentendrückerelement. Vorzugsweise sind dabei das Komponentendrückerelement und das Nahtherstellwerkzeug ebenfalls miteinander integral ausgebildet, wobei der Nahtpressstempel als kombiniertes Komponentendrückerelement / Nahtherstellwerkzeug bei einer vorteilhaften Ausgestaltung der Erfindung günstigerweise als Nahtpressstempel vorzugsweise als Nahtpressrolle ausgebildet ist. Demnach weist die erfindungsgemäße Nahtherstellmaschine in einer besonders vorteilhaften Ausführungsform nur eine Aufnahmestange auf, an der die Nahtpressrolle unten angeordnet ist. Das kombinierte Komponentendrückerelement/Nahtherstellwerkzeug ist entsprechend dem nicht kombinierten Komponentendrückerelement federkraftbeaufschlagt und auf die Arbeitsfläche, insbesondere deren Stützplatte bzw. dem Arbeitsfenster der Stützplatte absenkbar.

Vorzugsweise weist der mindestens eine Nahtpressstempel stirnseitig ein formgebendes Druckprofil für die Verbindungsnaht auf, das die Form, d.h. die Geometrie der Verbindungsnaht bestimmt. Dies besagt, dass der Stempel stirnseitig nicht eben ausgebildet ist, sondern Vorsprünge und/oder Vertiefungen aufweist, die formgebend für die Verbindungsnaht sind. So könnten beispielsweise gestrichelte oder gepunktete Schweißnähte erzeugt werden. Natürlich geht dies auch über die Außenkontur des Nahtpressstempels und/oder über die Form des Laserlichtspots. Der Nahtpressstempel ist wie vorstehend bereits angegeben, vorzugsweise austauschbar, um durch Schweißen Verbindungsnähte zu erzeugen, die unterschiedliche Form und/oder Breite aufweisen.

Der Komponentendrückerfuß kann eine Fußausnehmung zum Durchtritt des Nahtpressstempels aufweisen, damit sich dieser auf der Stützplatte abstützen kann. Dabei sind die Fußausnehmung und die Querschnittsform des Nahtpressstempels vorzugsweise aneinander angepasst. Alternativ dazu kann er auch ohne Fußausnehmung ausgeführt sein, wenn dieser anstelle dessen ein transparentes Durchtrittsfenster für den Laserstrahl aufweist, und der Nahtpressstempel auf den Komponentendrückerfuß aufgesetzt wird und diesen gegen die Stützplatte drückt, um die zu verbindenden Komponenten nach dem Plastifizieren zusammenzupressen. Es ist prinzipiell auch möglich, den Komponentendrückerfuß allein als Nahtpressstempel zu verwenden, wobei dieser in herkömmlicher Weise mittels einer Drückerfußbetätigungsvorrichtung unabhängig von der Hubstange auf die Stützplatte absenkbar ist, um die zu verbindenden Komponenten zu klemmen und durch den Komponentenscheiber vorwärts zu bewegen. Die Erfindung schließt auch die Möglichkeit ein, den Komponentendrückerfuß anstelle des Nahtpressstempels unten an der Hubstange gegenüber der Hubstange federkraftbelastet verschiebbar anzubringen, und dabei den Komponentendrückerfuß mit einer Grundkraft zu beaufschlagen, die durch die Bewegung der Hubstange nach unten verstärkt und bei der Bewegung der Hubstange nach oben verringert wird.

Bei einer besonders günstigen Ausführungsform der Erfindung ist der Laserstrahl gepulst auf die Stützplatte gerichtet. Dabei sind die Pulsdauer und die Leistung des Laserstrahls vorzugsweise von einer Oszillationsfrequenz der Hubstange oder des Komponentenschiebers abhängig. Dies bedeutet, dass der Schweißvorgang einerseits stattfinden kann, während die verbindenden Komponenten nicht von dem Komponentenschieber bewegt werden. Demnach werden der Pressvorgang und der vorzugsweise gleichzeitige Energieeintrag mittels Laserstrahl zur Erzeugung der Verbindungsnaht vorzugsweise ausgeführt, wenn der Komponentenschieber nicht arbeitet. Andererseits kann der Schweißvorgang aber auch stattfinden, während die verbindenden Komponenten von dem Komponentenschieber bewegt werden. Demnach werden in diesem Fall der Pressvorgang und der vorzugsweise gleichzeitige Energieeintrag mittels Laserstrahl zur Erzeugung der Verbindungsnaht ausgeführt, wenn der Komponentenschieber arbeitet. In diesem Fall bewegt sich mindestens der Laserstrahl und optional auch die Stützplatte, der Komponentendrückerfuß und der Nahtpressstempel mit der oszillierenden Bewegung des Komponentenschiebers mit. Vorzugsweise wird der gepulste Laserstrahl durch die Bewegung der Hubstange oder des Komponentenschiebers getriggert. Dazu sind entsprechende Detektoren vorgesehen. Die Verwendung eines gepulsten Laserstrahls ist insbesondere bei Ausführungsformen einer erfindungsgemäßen Nahtherstellmaschine von Vorteil, bei der die Haltestange als zu ihrer Längsachse oszillierend antreibbare Hubstange ausgebildet ist und das Nahtherstellwerkzeug oszillierend von den Komponenten abgehoben und anschließend wieder darauf abgesetzt wird.

Bei einer günstigen Ausführungsform der erfindungsgemäßen Nahtherstellmaschine ist die Oszillationsfrequenz der Hubstange oder des Komponentenschiebers getrennt voneinander einstellbar. Damit kann Einfluss auf den zeitlichen Vorschub der zu verbindenden Komponenten für die Herstellung der Verbindungsnaht genommen werden, sowie auf die Schweißgeschwindigkeit, insbesondere auf die Dauer der zur Plastifizierung vorgesehenen wie auch zu der für das Zusammenpressen vorgesehenen Zeit Einfluss genommen werden. Vorzugsweise sind dabei die Hubstange und der Komponentenschieber synchron antreibbar. Als besonders günstig hat es sich erwiesen, für den Schweißvorgang den Vorschub des Komponentenschiebers pro Zyklus frei wählbar zu ermöglichen. Damit kann auf einfache Weise der Abstand zwischen den einzelnen Schweißstellen variiert werden, so dass sowohl eine durchgehende linienförmige Schweißnaht, wie auch eine gepunktete oder gestrichelte Schweißnaht problemlos erzeugt werden können.

Bei einer weiteren besonders günstigen Ausführungsform der Erfindung ist der Laserstrahl ungepulst auf die Stützplatte gerichtet. Die Verwendung eines ungepulsten Laserstrahls ist insbesondere bei Ausführungsformen einer erfindungsgemäßen Nahtherstellmaschine von Vorteil, bei der die Haltestange nicht als zu ihrer Längsachse oszillierend antreibbare Hubstange ausgebildet ist und das Nahtherstellwerkzeug ohne abzuheben auf die zu verschweißenden Komponenten einwirkt, d.h. diese kontinuierlich gegen die Arbeitsfläche, insbesondere das Arbeitsfenster der Arbeitsfläche drückt. Dies ist beispielsweise der Fall, wenn die Haltestange und die Tragestange miteinander integral als Aufnahmestange sowie das Komponentendrückerelement und das Nahtherstellwerkzeug integral als Nahtpressstempel ausgebildet sind, wobei der Nahtpressstempel vorzugsweise eine Nahtpressrolle aufweist. Das integral ausgebildete Nahtherstellwerkzeug / Komponentendrückerelement ist federkraftbeaufschlagt und auf die Arbeitsfläche, insbesondere deren Stützplatte bzw. dem Arbeitsfenster der Stützplatte absenkbar.

Bei einer bevorzugten Variante der erfindungsgemäßen Nahtherstellmaschine sind das Arbeitsfenster und der Komponentenschieber quer zur Bewegungsrichtung des Komponentenschiebers nebeneinander miteinander verbunden angeordnet und bewegen sich synchron miteinander.

Die erfindungsgemäße Nahtherstellmaschine ist zur Herstellung einer Schweißverbindungsnaht beim Fügen von mindestens zweiflächigen biegeschlaffen Komponenten vorgesehen, von denen wenigstens eine thermoplastisches Kunststoffmaterial aufweist, und zwar mit Hilfe von Laserstrahlung und mechanischem Druck, wobei eine Komponente für die Laserstrahlung stark absorbierend und die andere Komponente vorzugsweise transmittierend ist. Durch Wärme und Druck verschmelzen die beiden Komponenten lokal, wobei sich das angewandte KomponentenTransport-Verfahren nahe an dem herkömmlichen Nähen mit einer Nähmaschine orientiert. Die erfindungsgemäße Nahtherstellmaschine zeichnet sich aus durch die Kombination einer herkömmlichen Nähmaschine, die die Merkmale des Oberbegriffs des Anspruchs 1 aufweist, mit einer Laserquelle und einem Laseroptikkopf, die einen homogenen oder einen inhomogen ausgeleuchteten Laserspot beliebiger Form auf die zu verbindenden Komponenten projiziert. Der Laserspot kann beispielsweise rechteckig ausgebildet sein, mit einer Fläche von mehreren Quadratmillimetern, oder aber beispielsweise auch linienförmig ausgebildet sein. Der Laserstrahl ist entweder ungepulst oder gepulst auf die Komponenten gerichtet, wobei die Pulsenergie und ggf. die die Pulslänge auf die Komponentenkombination abgestimmt und optimiert ist.

Daraus ergibt sich eine Vielzahl von Vorteilen. Es können flache, nahezu unsichtbare und perspektivisch wasserdichte Nähe erzeugt werden. Es sind keine eventuell giftigen Zusatzstoffe, Kleber oder Tapes notwendig, um kunststoffbasierende Gewebe zu verbinden. Die Lasernaht muss nicht aushärten oder trocknen sondern ist sofort belastbar. Schweißnähte lösen sich nicht durch Wetter oder Waschmittel auf, wie es Tape-gedichtete Nähte oftmals tun. Neben unelastischen Nähten sind auch elastische Nähte mit der erfindungsgemäßen Nahtherstellmaschine herstellbar. Das Verbinden der Komponenten mittels der erfindungsgemäßen Nahtherstellmaschine liegt ergonomisch sehr nahe am herkömmlichen Nähen. Es ist kein großer Unterschied in der Maschinengeometrie, der Maschinenbedienung und des Komponentenhandlings nötig. Daher kann diese Nahtherstellmaschine von vorhandenen Arbeitskräften ohne weiteres genutzt werden.

Prinzipiell besteht damit auch die Möglichkeit, vorhandene Nähmaschinen auf Laser umzustellen. Real anwendbare Maschinen für diese Anwendung sind schnell verfügbar, da die Nutzung der kompletten Mechanik für die Herstellung der Verbindungsnaht und den Komponententransport möglich ist und sich der Bedienung von einer herkömmlichen Maschinen nur unwesentlich unterscheidet. Dabei ist die Nadel einer herkömmlichen Nähmaschine vorzugsweise durch einen Nahtpressstempel ersetzt, der die mindestens zwei Komponentenlagen im Moment des Laserschweißens zusammendrückt. Der Laserstrahl kann von unten und/oder von oben in die mindestens eine Laserlicht absorbierende Komponente eingebracht werden.

Dabei kann der Laseroptikkopf zum Beispiel mindestens teilweise in die untere Komponententransportvorrichtung integriert sein und ermöglicht es so, dass der Laserlichtspot zusammen mit Stützplatte, Komponentendrückerfuß und Nahtpressstempel sich mit der oszillierenden Bewegung des Komponentenschiebers mitbewegen, analog zu herkömmlichen Nähmaschinen. Dabei werden aber keine strahlführenden Teile, wie z. B. Glasfasern, mitbewegt, so dass hier keine Beanspruchung von sensiblen Bauteilen durch die dauernde Bewegung geschieht. Der Laserstrahl ist an der Schnittstelle zwischen fixen und beweglichen Teilen frei in der Luft geführt. Durch die spezielle Anordnung der Optik bleibt die Position des Laserspots, der Stützplatte, des Komponentendrückerfußes und des Nahtpressstempels relativ zu den zu verbindenden Komponenten während der Bewegung des Transporteurs stabil. Dies ermöglicht in dieser Ausführungsform vorteilhafterweise die Schweißung während der Bewegung der Komponenten. Dabei ist das lichtdurchlässige Arbeitsfenster einfach wechselbar, falls es durch Verschmutzungen oder Einbrände unbrauchbar geworden ist. Geschweißt wird vorzugsweise immer dann, wenn der Stempel den Stoff auf das Fenster drückt. Der Laserpuls wird, an die Drehposition des antreibbaren Komponentenschiebers und des Nahtpressstempels gekoppelt, automatisch ausgelöst. Die maximale Drehzahl der Maschine ist limitiert durch die Leistung der Laserquelle und die notwendige Pulsdauer pro Schweißstelle. Der Vorschub der zu verbindenden Komponenten ist pro Nähmaschine umdrehungsvariabel. Damit können die einzelnen Schweißpunkte lückenlos, überlappend oder mit definierten Abständen gesetzt werden. Weiterhin ist es möglich, nicht bei jedem Vorschub, sondern nur bei jedem zweiten, dritten oder vierten Vorschub zu Schweißen. Der Laserpuls wird vorzugsweise nur dann ausgelöst, wenn der Nahtpressstempel, mit oder ohne auf dem Arbeitsfenster befindliche Komponenten auf das Arbeitsfenster drückt. Das lichtdurchlässige Arbeitsfenster und der mindestens eine Anpressstempel sind etwa gleich groß ausgebildet, wobei der mindestens eine Anpressstempel vorzugsweise größer als der Laserlichtspot ist. Damit kann kein direktes Laserlicht austreten. Die Lasersicherheit und Verbrennungsgefahr für die Hände des Bedieners ist damit wesentlich verbessert.

Abweichend von dieser Lösung mit dem Laseroptikkopf in der unteren Komponententransportvorrichtung kann man auch den Laserstrahl von oben auf die Komponenten richten und in diese eindringen lassen. Dann würde man auch hier die Nadel vorzugsweise durch den Nahtpressstempel als Nahtherstellwerkzeug ersetzen, welcher gleichzeitig den Andruck gewährleistet und den Laserstrahl zuführt. Denkbare wäre hier ein Metallrohr mit Fenster unten oder ein massiver Glasstab, mit beliebigem Querschnitt, beispielsweise kreisförmig, rechteckig oder sechseckig, in den das Laserlicht eingekoppelt wird. Auch diese Anordnung wäre von der Bedienung her nahe an einer herkömmlichen Nähmaschine. Die üblichen vorstehend genannten Vorteile gelten hier entsprechend.

Die Erfindung ermöglicht ein spezielles Verfahren zum Verbinden von mindestens zwei flächigen biegeschlaffen Komponenten mittels wenigstens einer Verbindungsnaht, wobei wenigstens eine der Komponenten thermoplastisches Kunststoffmaterial aufweist, das in Form einer homogen Folie oder eines textilen Stoffgebildes aus miteinander verschlungenen Kunststofffasern oder Kunststofffäden bereitgestellt wird, im Laserschweißverfahren, wobei eine Nahtherstellmaschine mit einem Maschinengehäuse verwendet wird, das mit einer Arbeitsfläche für die zu verbindenden Komponenten und einem darüber angeordneten auskragenden Arbeitsarm ausgebildet ist und eine in dem Arbeitsarm aufgenommene verschiebbar geführte Hubstange zur Aufnahme eines Nahtherstellwerkzeuges, die zu ihrer Längsachse oszillierend angetrieben wird, eine in der Arbeitsfläche aufgenommenen Stützplatte für die Komponenten, zu der die Hubstange senkrecht angeordnet und in die mindestens ein Komponentenschieber eingesetzt ist und oszillierend angetrieben wird, und mit mindestens einem absenkbaren kraftbeaufschlagten Komponentendrückerfuß, der im abgesenkten Zustand mit dem mindestens einen Komponentenschieber zusammenarbeitet, aufweist, benutzt wird. Dabei wird unten an der Hubstange mindestens ein Nahtpressstempel als Nahtherstellwerkzeug angeordnet, ein Laserstrahl von unten oder von oben auf die Stützplatte gerichtet und auf der Stützplatte bzw. auf einer der auf der Stützplatte aufliegenden Komponenten ein Laserlichtspot geformt.

Nachfolgend wird die Erfindung anhand von drei in der Zeichnung dargestellten Ausführungsbeispielen näher erläutert. Weitere Merkmale der Erfindung ergeben sich aus der Beschreibung der Ausführungsbeispiele in Verbindung mit den Patentansprüchen. Die einzelnen Merkmale der Erfindung können für sich allein oder zu mehreren bei einer erfindungsgemäßen Nahtherstellmaschine verwirklicht sein. Es zeigen:

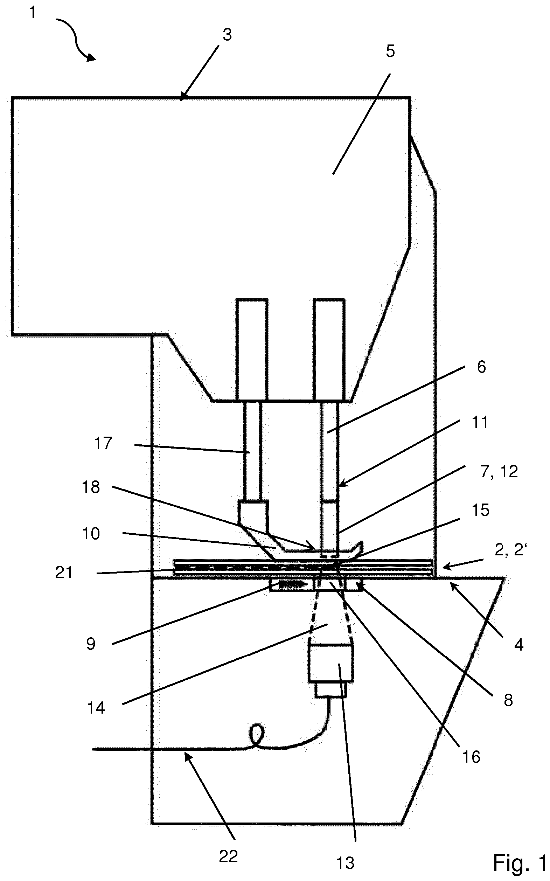

- Figur 1: ein erstes Ausführungsbeispiel der erfindungsgemäßen Nahtherstellmaschine, bei der der Laserstrahl von unten auf die Stützplatte gerichtet ist, wobei die Haltestange zur Aufnahme des Nahtherstellwerkzeuges und die Tragestange zur Aufnahme des Komponentendrückerelementes getrennt voneinander ausgebildet,

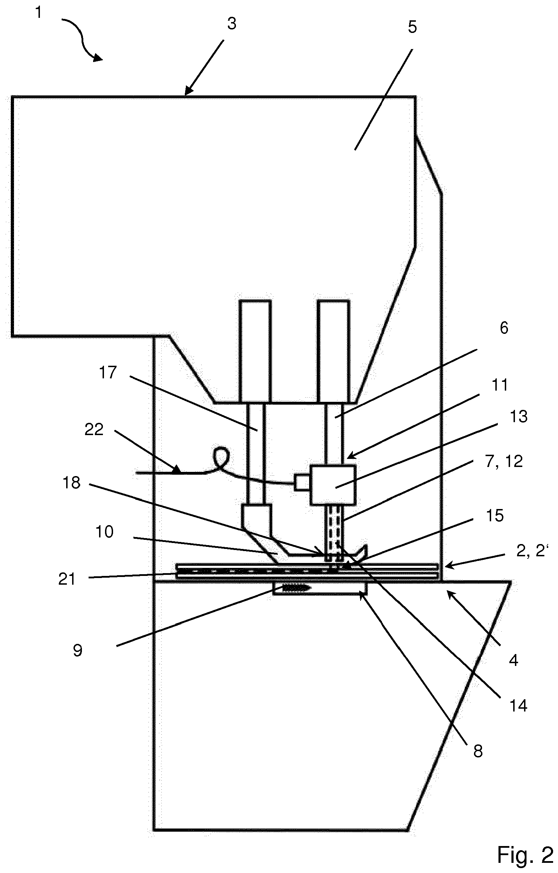

- Figur 2: ein zweites Ausführungsbeispiel der erfindungsgemäßen Nahtherstellmaschine, bei der Laserstrahl von oben auf die Stützplatte gerichtet ist, wobei die Haltestange zur Aufnahme des Nahtherstellwerkzeuges und die Tragestange zur Aufnahme des Komponentendrückerelementes getrennt voneinander ausgebildet sind und der Nahtpressstempel lichtdurchlässig ausgebildet und der Laserstrahl durch den Nahtpressstempel hindurch auf die Stützplatte gerichtet ist,

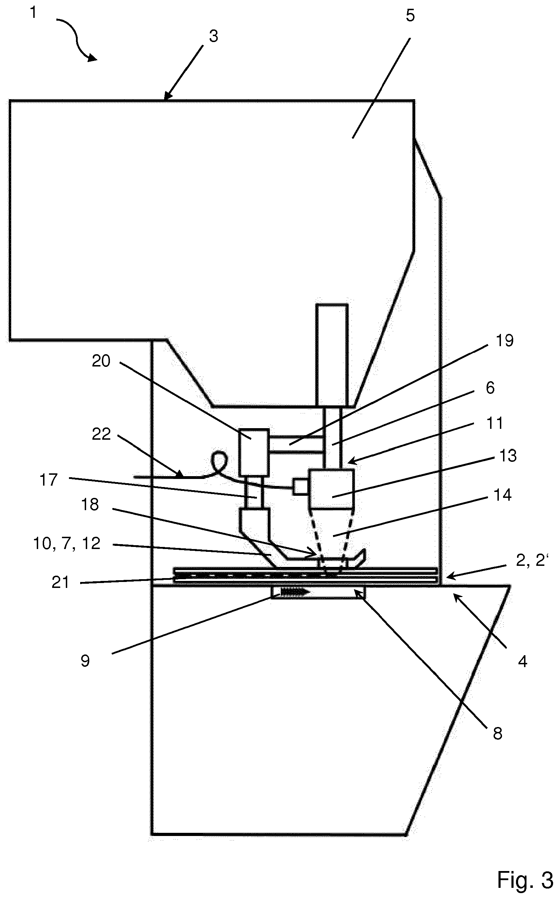

- Figur 3: ein drittes Ausführungsbeispiel der erfindungsgemäßen Nahtherstellmaschine, bei der der Laserstrahl von oben auf die Stützplatte gerichtet ist, wobei die Haltestange zur Aufnahme des Nahtherstellwerkzeuges und die Tragestange zur Aufnahme des Komponentendrückerelementes getrennt voneinander ausgebildet sind, die Tragestange mit der Haltestange verbunden ist und der Komponentendrückerfuß teilweise lichtdurchlässig ausgebildet ist und den Nahtpressstempel bildet, wobei der Laserstrahl durch den Komponentendrückerfuß hindurch auf die Stützplatte gerichtet ist,

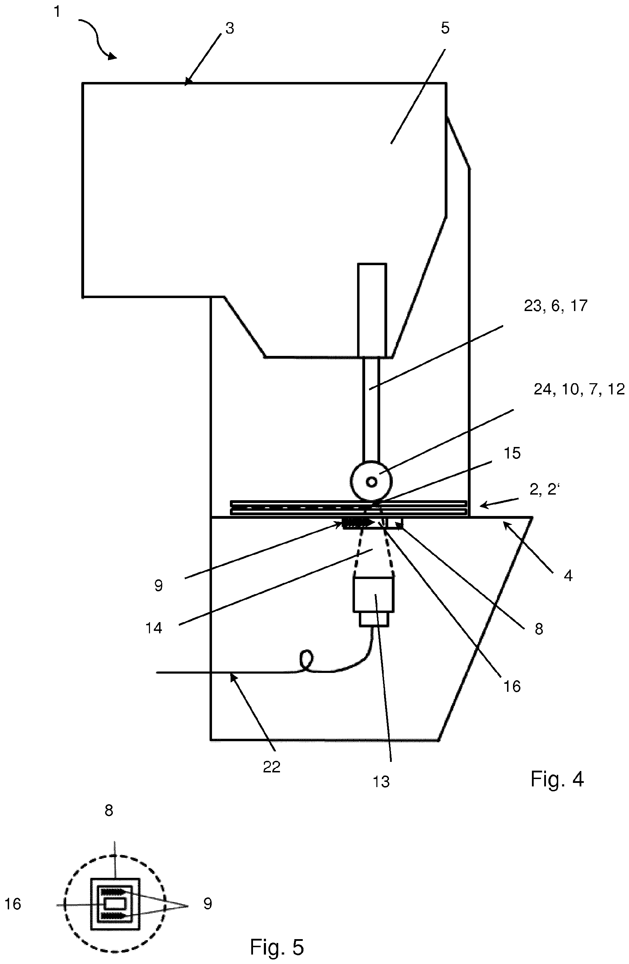

- Figur 4: ein viertes Ausführungsbeispiel der erfindungsgemäßen Nahtherstellmaschine, bei der der Laserstrahl von unten auf die Stützplatte gerichtet ist, wobei die Haltestange zur Aufnahme des Nahtherstellwerkzeuges mit der Tragestange zur Aufnahme des Komponentendrückerelementes und das Nahtherstellwerkzeug mit dem Komponentendrückerelement integral ausgebildet ist und
- Figur 5: eine Detaildarstellung mit Draufsicht auf die Stützplatte gemäß Figur 4.

Die Figuren 1 bis 3 zeigen verschiedenartig ausgebildete erfindungsgemäße Nahtherstellmaschinen 1 in einer schematischen Darstellung, bei der die Haltestange 6 zur Aufnahme des Nahtherstellwerkzeuges 7 und die Tragestange 17 zur Aufnahme des Komponentendrückerelementes 10 getrennt voneinander ausgebildet und das Nahtherstellwerkzeug 7 bzw. das Komponentendrückerelement 10 an der entsprechenden Stange 6, 17 befestigt ist. Dabei ist als Nahtherstellwerkzeug 7 ein Nahtpressstempel 12 und als Komponentendrückerelement 10 ein Komponentendrückerfuß 10 vorgesehen. Die jeweilige Nahtherstellmaschine 1 ist zum Verbinden von mindestens zwei flächigen biegeschlaffen Komponenten 2, 2' mittels einer Verbindungsnaht 21, insbesondere Schweißnaht, vorgesehen, wobei wenigstens eine der Komponenten 2, 2' thermoplastisches Kunststoffmaterial aufweist, das in Form einer homogen Folie oder eines textilen Stoffgebildes aus miteinander verschlungenen Kunststofffasern oder Kunststofffäden vorliegt. Die Nahtherstellmaschine 1 weist ein Maschinengehäuse 3 auf, das mit einer Arbeitsfläche 4 für die zu verbindenden Komponenten 2, 2' zur Auflage und einem darüber angeordneten auskragenden Arbeitsarm 5 ausgebildet ist. In dem Arbeitsarm 5 ist eine zu ihrer Längsachse oszillierend antreibbare Hubstange 6 als Haltestange 6 zur Aufnahme des Nahtherstellwerkzeuges 7 zum Erzeugen der Verbindungsnaht 21 angeordnet. Die Hubstange 6 ist mit einer in den Figuren nicht dargestellten Hubstangenantriebsvorrichtung, die vorzugsweise einen elektrischen Antriebsmotor besitzt, verbunden.

Die Nahtherstellmaschinen 1 weisen zu dem jeweils eine in der Arbeitsfläche 4 aufgenommene Stützplatte 8 für die Komponenten 2, 2' auf, zu der die Hubstange 6 senkrecht angeordnet ist und in die mindestens ein oszillierend antreibbarer Komponentenschieber 9 eingesetzt ist. Der Komponentenschieber 9 ist mit einer nicht dargestellten Komponentenschieberantriebsvorrichtung verbunden, die vorzugsweise ein elektrisches Treibwerk besitzt. Gemäß den Figuren 1 bis 3 weisen die Nahtherstellmaschinen 1 außerdem einen absenkbaren kraftbeaufschlagten Komponentendrückerfuß 10 auf, der im abgesenkten Zustand federnd auf der Stützplatte 8 aufliegt und mit dem Komponentenschieber 9 zum Vorschub der beiden Komponenten 2, 2' zusammenarbeitet.

Die Hubstange 6 steht über den Arbeitsarm 5 mit einem unteren Stangenende 11 vor, an dem unten der Nahtpressstempel 12 als Nahtherstellwerkzeug 7 angeordnet ist. Bei allen Nahtherstellmaschinen 1 ist ein Laseroptikkopf 13 vorgesehen, der mit einer in den Figuren 1 bis 3 nicht abgebildeten Laserquelle über einen Lichtleiter 22 verbunden ist. Von der Laserquelle wird ein Laserstrahl 14 dem Laseroptikkopf 13 zugeführt, der über den Laseroptikkopf 13 auf die Stützplatte 8 gerichtet ist, und dort einen Laserlichtspot 15 bildet.

Bei dem Ausführungsbeispiel gemäß der Figur 1 ist der Laseroptikkopf 13 in dem Maschinengehäuse 3 unterhalb der Arbeitsfläche 4 angeordnet und bestrahlt die Stützplatte 8 der Arbeitsfläche 4 von unten. Bei den Ausführungsbeispielen nach den Figuren 2 und 3 ist der Laseroptikkopf 13 jeweils an dem unteren Ende 11 der Hubstange 6 angeordnet und bestrahlt die Stützplatte 8 der Arbeitsfläche 4 direkt oder indirekt von oben. Dabei ist der Komponentendrückerfuß 10 von wenigstens einer in dem Maschinengehäuse 3 angeordneten mechanischen oder pneumatischen Federung kraftbeaufschlagt.

Bei dem in der Figur 1 gezeigten Ausführungsbeispiel weist die Stützplatte 8 der Arbeitsfläche 4 ein lichtdurchlässiges Arbeitsfenster 16 auf, das unterhalb des Nahtpressstempels 12 angeordnet ist, wobei der Laserstrahl 14 von unten auf das Arbeitsfenster 16 der Stützplatte 8 gerichtet ist. Der Laserstrahl durchdringt das Arbeitsfenster 16 und beaufschlagt die zu verbindenden Komponenten von unten mit Laserlicht. Das Arbeitsfenster 16 ist in Arbeitsrichtung der Nahtherstellmaschine 1 hinter dem Komponentenschieber 9 angeordnet. Der Komponentendrückerfuß 10 ist an einem Tragestange 17 einer in der Figur 1 nicht veranschaulichten Betätigungseinrichtung befestigt, mit der der Komponentendrückerfuß 10 in vertikaler Richtung verschiebbar ist. Der Komponentendrückerfuß 10 und der Nahtpressstempel 12 sind aus Metall hergestellt und somit für den Laserstrahl 14 lichtundurchlässig. Der Komponentendrückerfuß 10 weist eine Fußausnehmung 18 zum Durchtritt des Nahtpressstempels 12 auf, wobei die Fußausnehmung 18 an die Querschnittsform des Nahtpressstempels 12 angepasst ist.

Die Figur 2 verbildlicht eine andere Ausführungsform der erfindungsgemäßen Nahtherstellmaschine 1, bei der der Laseroptikkopf 13 an dem unteren Stangenende 11 der Hubstange 6 angeordnet ist. Der Nahtpressstempel 12 ist in diesem Fall aus einem für Laserlicht transparenten Material hergestellt. Er ist in Verlängerung der Hubstange 6 unten an dem Laseroptikkopf 13 befestigt. Der Laserstrahl 14 wird in den Laserlicht leitenden Nahtpressstempel 12 eingekoppelt und führt den Laserstrahl 14 zu der Stützplatte 8 der Arbeitsfläche 4. Dabei ist der Komponentendrückerfuß 10 aus Metall hergestellt und weist eine Fußausnehmung 18 für den Nahtpressstempel 12 auf. Der Laseroptikkopf 13 wird mit der Hubstange 6 oszillierend auf und ab bewegt. Er ist daher vorzugsweise über einen flexiblen Lichtleiter 22 mit der in der Figur 2 nicht dargestellten Laserquelle verbunden.

Das in der Figur 3 abgebildete Ausführungsbeispiel unterscheidet sich von dem im der Figur 2 gezeigten Ausführungsbeispiel lediglich dadurch, dass der Komponentendrückerfuß 10 den Nahtpressstempel 12 bildet. Der Komponentendrückerfuß 10 ist an dem unteren Ende 11 der Hubstange 6 oberhalb des Laseroptikkopfes 13 mittels eines sich horizontal erstreckenden Haltearms 19 befestigt. Der vertikale Tragestange 17 für den Komponentendrückerfuß 10 ist verkürzt ausgebildet und über eine Winkelzwischenstück 20 mit dem horizontalen Haltearm 19 verbunden. Damit wird nicht nur der Laseroptikkopf 13 mit der Hubstange 6 oszillierend auf und ab bewegt, sondern auch der Komponentendrückerfuß 10. Das Winkelzwischenstück 20 verbindet in einer Variante den vertikalen Tragestange 17 starr mit dem horizontalen Haltearm 19, in einer anderen Variante horizontal verschiebbar. Im zweiten Fall weist das Winkelzwischenstück 20 innen einen in der Figur 3 nicht sichtbaren Kraftspeicher auf, der den vertikalen Tragestange 17 des Komponentendrückerfuß 10 nach unten kraftbeaufschlagt, sodass der Komponentendrückerfuß 10 unabhängig von der momentanen Hubstellung der Hubstange 6 immer gegen die Stützplatte 8 gedrückt wird und so an dieser gehalten wird, oder die auf die Arbeitsfläche 4 aufgelegten Komponenten 2, 2' immer an die die Stützplatte 8 angepresst werden.

Das in der Figur 4 abgebildete Ausführungsbeispiel zeigt in einer schematischen Darstellung eine erfindungsgemäße Nahtherstellmaschine 1, bei der der Laserstrahl 14 von unten auf das lichtdurchlässige Arbeitsfenster 16 der Stützplatte 8 gerichtet ist. Der Laserstrahl geht von einem in dem Maschinengehäuse 3 aufgenommenen Laseroptikkopf 13 aus, der in dem Maschinengehäuse 3 unterhalb der Arbeitsfläche 4 mit der Stützplatte 8 und dem Arbeitsfenster 16 angeordnet ist und die Stützplatte 8 der Arbeitsfläche 4 von unten bestrahlt. Dabei sind die Haltestange 6 zur Aufnahme des Nahtherstellwerkzeuges 7 und die Tragestange 17 zur Aufnahme des Komponentendrückerelementes 10 aus den Figuren 1 bis 2 integral miteinander ausgebildet sind, d.h. von einer einzigen Aufnahmestange 23 gebildet werden, wobei zudem das Nahtherstellwerkzeug 7 und das Komponentendrückerelement 10 aus den Figuren 1 bis 3 ebenfalls als integraler Nahtpressstempel 12, insbesondere als integrale Nahtpressrolle 24 ausgeführt und an der Aufnahmestange 23 unten befestigt ist. Der Arbeitsarm 5 weist innen einen in der Figur 4 nicht sichtbaren Kraftspeicher auf, der die vertikale Aufnahmestange 23 der Nahtpressrolle 24 nach unten kraftbeaufschlagt, sodass die Nahtpressrolle 24 zumindest im abgesenkten Zustand immer gegen die Stützplatte 8 bzw. deren lichtdurchlässiges Arbeitsfenster 16 gedrückt wird und so daran beim Schweißvorgang dauerhaft gehalten wird und dabei die auf die Arbeitsfläche 4 aufgelegten Komponenten 2, 2' immer an die die Stützplatte 8 angepresst.

In Figur 5 ist die Stützplatte 8 mit dem Arbeitsfenster 16 und den Komponentenschieber 9 als Detail dargestellt und veranschaulicht deren Anordnung. Das Arbeitsfenster 16 und der Komponentenschieber 9 sind quer zur Bewegungsrichtung des Komponentenschiebers 9 nebeneinander miteinander verbunden angeordnet (nicht dargestellt), und bewegen sich synchron miteinander.

## Patentansprüche

1. Nahtherstellmaschine (1) zum Verbinden von mindestens zwei flächigen biegeschlaffen Komponenten (2, 2') mittels wenigstens einer Verbindungsnaht, wobei wenigstens eine der Komponenten (2, 2') thermoplastisches Kunststoffmaterial aufweist, das in Form einer homogenen Folie oder eines textilen Stoffgebildes aus miteinander verschlungenen Kunststofffasern oder Kunststofffäden vorliegt, mit einem Maschinengehäuse (3), das mit einer Arbeitsfläche (4) für die zu verbindenden Komponenten (2, 2') und einem darüber angeordneten auskragenden Arbeitsarm (5) ausgebildet ist, mit mindestens einer Haltestange (6) zur Aufnahme eines Nahtherstellwerkzeuges (7) und mindestens einer Tragestange (17) zur Aufnahme mindestens eines auf die Arbeitsfläche (4) absenkbaren kraftbeaufschlagten Komponentendrückerelementes (10), die in dem Arbeitsarm (5) nach unten vorstehend aufgenommenen sowie in Richtung ihrer Längsachse bewegbar gelagert sind, und mit einer in der Arbeitsfläche (4) aufgenommenen Stützplatte (8) für die Komponenten (2, 2'), zu der die Haltestange (6) und die Tragestange (17) senkrecht angeordnet sind und in die mindestens ein oszillierend antreibbarer Komponentenschieber (9) eingesetzt ist,
wobei zumindest die Tragestange (17) federkraftbeaufschlagt auf die Stützplatte (8) absenkbar ist und das Komponentendrückerelement (10), im abgesenkten Zustand mit dem mindestens einen Komponentenschieber (9) zusammenarbeitet,
wobei unten an der Haltestange (6) mindestens ein Nahtpressstempel (12) als Nahtherstellwerkzeug (7) angeordnet ist, und
ein Laserstrahl (14) auf die Stützplatte (8) gerichtet ist und dort einen Laserlichtspot (15) formt,
**dadurch gekennzeichnet, dass**
die Stützplatte (8) ein lichtdurchlässiges Arbeitsfenster (16) aufweist, das unterhalb des Nahtpressstempels (12) angeordnet ist, und der Laserstrahl (14) von unten auf das Arbeitsfenster (16) der Stützplatte (8) gerichtet ist und der Nahtpressstempel (12) den Laserlichtspot (15) vollständig abdeckt, oder dass der Nahtpressstempel (12) mindestens teilweise lichtdurchlässig ausgebildet und der Laserstrahl (14) von oben durch den Nahtpressstempel (12) auf die Stützplatte (8) gerichtet ist.

2. Nahtherstellmaschine nach Anspruch 1, **dadurch gekennzeichnet, dass** die Haltestange (6) als zu ihrer Längsachse oszillierend antreibbare Hubstange (6) ausgebildet ist.

3. Nahtherstellmaschine nach Anspruch 2, **dadurch gekennzeichnet, dass** das Komponentendrückerelement (10) als Komponentendrückerfuß (10) ausgebildet ist.

4. Nahtherstellmaschine nach Anspruch 1, **dadurch gekennzeichnet, dass** die Haltestange (6) und die Tragestange (17) miteinander integral ausgebildet sind und eine Aufnahmestange (23) für das Nahtherstellwerkzeug (7) und das Komponentendrückerelement (10) bildet.

5. Nahtherstellmaschine nach Anspruch 4, **dadurch gekennzeichnet, dass** das Komponentendrückerelement (10) und das Nahtherstellwerkzeug (7) miteinander integral ausgebildet sind und den Nahtpressstempel (12) bilden.

6. Nahtherstellmaschine nach Anspruch 5, **dadurch gekennzeichnet, dass** der Nahtpressstempel (12) als Nahtpressrolle (24) ausgebildet ist.

7. Nahtherstellmaschine nach einem der vorstehenden Ansprüche 1 bis 3, **dadurch gekennzeichnet, dass** der Laserstrahl (14) von oben durch den Nahtpresstempel (12) in Längsrichtung auf die Stützplatte (8) gerichtet ist.

8. Nahtherstellmaschine nach einem der vorstehenden Ansprüche, **dadurch gekennzeichnet, dass** der Nahtpressstempel (12) stirnseitig ein formgebendes Druckprofil für die Verbindungsnaht aufweist und vorzugsweise austauschbar ist.

9. Nahtherstellmaschine nach Anspruch 3, **dadurch gekennzeichnet, dass** der Komponentendrückerfuß (10) eine Fußausnehmung (18) zum Durchtritt des Nahtpressstempels (12) aufweist, wobei die Fußausnehmung (18) und die Querschnittsform des Nahtpressstempels (12) vorzugsweise aneinander angepasst sind.

10. Nahtherstellmaschine nach einem der vorstehenden Ansprüche 2 oder 3, **dadurch gekennzeichnet, dass** der Laserstrahl (14) gepulst auf die Stützplatte (8) gerichtet ist, wobei die Pulsdauer und die Leistung des Laserstrahls (14) vorzugsweise von einer Oszillationsfrequenz der Hubstange (6) oder des Komponentenschiebers (9) abhängig sind.

11. Nahtherstellmaschine nach Anspruch 10, **dadurch gekennzeichnet, dass** der gepulste Laserstrahl (14) durch die Bewegung der Hubstange (6) oder des Komponentenschiebers (9) getriggert ist, wobei vorzugsweise die Oszillationsfrequenz der Hubstange (6) oder des Komponentenschiebers (9) getrennt voneinander einstellbar sind.

12. Nahtherstellmaschine nach einem der vorstehenden Ansprüche, **dadurch gekennzeichnet, dass** die Hubstange (6) und der Komponentenschieber (9) synchron antreibbar sind und/oder der Vorschub des Komponentenschiebers (9) pro Zyklus einstellbar ist.

13. Nahtherstellmaschine nach einem der vorstehenden Ansprüche 4 bis 6, **dadurch gekennzeichnet,** der Laserstrahl (14) ungepulst auf die Stützplatte (8) gerichtet ist.

14. Nahtherstellmaschine nach einem der vorstehenden Ansprüche 4 bis 6 oder 13, **dadurch gekennzeichnet, dass** das Arbeitsfenster (16) und der Komponentenschieber (9) nebeneinander angeordnet sind und sich synchron miteinander bewegen.

## Claims

1. A seam production machine (1) for joining at least two planar flexible components (2, 2') by way of at least one joining seam, at least one of the components (2, 2') comprising thermoplastic synthetic material, which is present in the form of a homogeneous film, or in the form of a textile fabric structure made of mutually intertwined synthetic fibers or synthetic threads, comprising a machine housing (3), which is designed with a work surface (4) for the components (2, 2') to be joined and a projecting work arm (5) disposed there- above, at least one retaining bar (6) for receiving a seam production tool (7) and at least one support bar (17) for receiving at least one component presser element (10) that is acted upon by a force and can be lowered onto the work surface (4), which are received in the work arm (5) so as to protrude downwardly and are movably mounted in the direction of the longitudinal axes thereof, and further comprising a support plate (8) for the components (2, 2'), which is received in the work surface (4) and with respect to which the retaining bar (6) and the support bar (17) are perpendicularly disposed and in which at least one oscillatingly drivable component feeder (9) is inserted,
at least the support bar (17) being lowerable onto the support plate (8) under the action of a spring force, and the component presser element (10) when lowered cooperating with the at least one component feeder (9),
at least one seam pressing ram (12) being disposed at the bottom of the retaining bar (6), serving as a seam production tool (7), and
a laser beam (14) being directed at the support plate (8) and forming a laser light spot (15) there,
**characterized in that**
the support plate (8) comprises a translucent work window (16), which is disposed beneath the seam pressing ram (12), and the laser beam (14) is directed from beneath at the work window (16) of the support plate (8) and the seam pressing ram (12) completely covers the laser light spot (15), or
that the seam pressing ram (12) is designed to be at least partially translucent, and the laser beam (14) is directed at the support plate (8), from above, through the seam pressing ram (12).

2. The seam production machine according to claim 1, **characterized in that** the retaining bar (6) is designed as a lifting bar (6) oscillatingly drivable with respect to the longitudinal axis thereof.

3. The seam production machine according to claim 2, **characterized in that** the component presser element (10) is designed as a component presser foot (10).

4. The seam production machine according to claim 1, **characterized in that** the retaining bar (6) and the support bar (17) are designed integrally with one another, and form a receiving bar (23) for the seam production tool (7) and the component presser element (10).

5. The seam production machine according to claim 4, **characterized in that** the component presser element (10) and the seam production tool (7) are designed integrally with one another and form the seam pressing ram (12).

6. The seam production machine according to claim 5, **characterized in that** the seam pressing ram (12) is designed as a seam pressing roll (24).

7. A seam production machine according to any one of the preceding claims 1 to 3, **characterized in that** the laser beam (14) is directed at the support plate (8), from above, through the seam pressing ram (12) in the longitudinal direction.

8. A seam production machine according to any one of the preceding claims, **characterized in that** the seam pressing ram (12), at the end face, has a shaping pressure profile for the joining seam and is preferably exchangeable.

9. The seam production machine according to claim 3, **characterized in that** the component presser foot (10) has a foot cut-out (18) for the seam pressing ram (12) to pass through, wherein the foot cut-out (18) and the cross-sectional shape of the seam pressing ram (12) are preferably adapted to one another.

10. The seam production machine according to claim 2 or 3, **characterized in that** the laser beam (14) is directed at the support plate (8) in a pulsed manner, wherein the pulse duration and the output of the laser beam (14) are preferably dependent on an oscillating frequency of the lifting bar (6) or of the component feeder (9).

11. The seam production machine according to claim 10, **characterized in that** the pulsed laser beam (14) is triggered by the movement of the lifting bar (6) or of the component feeder (9), wherein the oscillating frequency of the lifting bar (6) or of the component feeder (9) can preferably be set separately from one another.

12. A seam production machine according to any one of the preceding claims, **characterized in that** the lifting bar (6) and the component feeder (9) can be driven synchronously and/or the advancement of the component feeder (9) for each cycle can be set.

13. A seam production machine according to any one of the preceding claims 4 to 6, **characterized in that** the laser beam (14) is directed at the support plate (8) in a non-pulsed manner.

14. A seam production machine according to any one of the preceding claims 4 to 6 or 13, **characterized in that** the work window (16) and the component feeder (9) are disposed next to one another and move synchronously with one another.

## Revendications

1. Machine de production de couture (1) destinée à relier au moins deux composants flexibles (2, 2'), sensiblement bidimensionnels, à l'aide d'au moins une couture de liaison, l'un au moins des composants (2, 2') comportant de la matière synthétique thermoplastique qui se présente sous la forme d'un film homogène ou d'une structure de matière textile composée de fibres de matière synthétique, ou de fils de matière synthétique, entrelacé(e)s, ladite machine comprenant un carter de machine (3) qui est formé avec une surface de travail (4) destinée aux composants à relier (2, 2'), et un bras de travail (5) en porte-à-faux disposé au-dessus, au moins une tige de retenue (6) destinée à recevoir un outil de production de couture (7) et au moins une tige de support (17) destinée à recevoir au moins un élément de poussée de composant (10) qui est contraint par une force et abaissable sur la surface de travail (4), lesquels éléments sont reçus dans le bras de travail (5) de manière saillante vers le bas et sont supportés de manière mobile dans la direction de leur axe longitudinal, et une plaque de support (8) qui est destinée aux composants (2, 2') et est reçue dans la surface de travail (4) et par rapport à laquelle la tige de retenue (6) et la tige de support (17) sont disposées perpendiculairement et dans laquelle au moins un coulisseau de composants (9) entraînables en oscillation est inséré,
au moins la tige de support (17) pouvant être abaissée sur la plaque de support (8) sous la contrainte d'une force de ressort et l'élément de poussée de composant (10) coopérant avec l'au moins un coulisseau de composants (9) à l'état abaissé,
au moins un poinçon de presse de couture (12) étant disposé comme outil de production de couture (7) en bas au niveau de la tige de retenue (6), et
un faisceau laser (14) étant dirigé sur la plaque de support (8) et formant à cet endroit un point de lumière laser (15),
**caractérisée en ce que**
la plaque de support (8) comporte une fenêtre de travail transparent (16) qui est disposée au-dessous du poinçon de presse de couture (12), et le faisceau laser (14) est dirigé depuis le bas sur la fenêtre de travail (16) de la plaque de support (8) et le poinçon de presse de couture (12) recouvre complètement le point de lumière laser (15), ou
le poinçon de presse de couture (12) est au moins partiellement transparent et le faisceau laser (14) est dirigé depuis le haut à travers le poinçon de presse de couture (12) sur la plaque de support (8).

2. Machine de production de couture selon la revendication 1, **caractérisée en ce que** la tige de retenue (6) est conçue comme une tige de levage (6) qui peut être entraînée en oscillation par rapport à son axe longitudinal.

3. Machine de production de couture selon la revendication 2, **caractérisée en ce que** l'élément de poussée de composants (10) est conçu sous la forme d'un pied de poussée de composants (10).

4. Machine de production de couture selon la revendication 1, **caractérisée en ce que** la tige de retenue (6) et la tige de support (17) sont formées d'une seule pièce l'une avec l'autre et forment une tige de réception (23) destinée à l'outil de production de couture (7) et à l'élément de poussée de composants (10).

5. Machine de production de couture selon la revendication 4, **caractérisée en ce que** l'élément de poussée de composants (10) et l'outil de production de couture (7) sont conçus d'une seule pièce l'un avec l'autre et forment le poinçon de presse de couture (12).

6. Machine de production de couture selon la revendication 5, **caractérisée en ce que** le poinçon de presse de couture (12) est conçu sous la forme d'un rouleau de presse de couture (24).

7. Machine de production de couture selon l'une des revendications 1 à 3 précédentes, **caractérisée en ce que** le faisceau laser (14) est dirigé sur la plaque de support (8) depuis le haut à travers le poinçon de presse de couture (12) dans la direction longitudinale.

8. Machine de production de couture selon l'une des revendications précédentes, **caractérisée en ce que** le poinçon de presse de couture (12) présente du côté frontal un profil de pression de mise en forme de la couture de liaison et est de préférence remplaçable.

9. Machine de production de couture selon la revendication 3, **caractérisée en ce que** le pied de presse de composants (10) comporte un évidement de pied (18) destiné au passage du poinçon de presse de couture (12), l'évidement de pied (18) et la forme en coupe transversale du poinçon de presse de couture (12) étant de préférence adaptés l'un à l'autre.

10. Machine de production de couture selon l'une des revendications 2 et 3 précédentes, **caractérisée en ce que** le faisceau laser (14) est dirigé de manière pulsée sur la plaque de support (8), la durée d'impulsion et la puissance du faisceau laser (14) dépendant de préférence d'une fréquence d'oscillation de la tige de levage (6) ou du coulisseau de composants (9).

11. Machine de production de couture selon la revendication 10, **caractérisée en ce que** le faisceau laser pulsé (14) est déclenché par le mouvement de la tige de levage (6) ou du coulisseau de composants (9), la fréquence d'oscillation de la tige de levage (6) et celle du coulisseau de composants (9) pouvant de préférence être réglées séparément l'une de l'autre.

12. Machine de production de couture selon l'une des revendications précédentes, **caractérisée en ce que** la tige de levage (6) et le coulisseau de composants (9) peuvent être entraînés de manière synchrone et/ou l'avance du coulisseau de composants (9) est réglable par cycle.

13. Machine de production de couture selon l'une des revendications précédentes 4 à 6, **caractérisée en ce que** le faisceau laser (14) est dirigé de manière non-pulsée sur la plaque de support (8).

14. Machine de production de couture selon l'une des revendications précédentes 4 à 6 ou 13, **caractérisée en ce que** la fenêtre de travail (16) et le coulisseau de composants (9) sont disposés l'un à côté de l'autre et se déplacent de manière synchrone l'un par rapport à l'autre.
